# EUROPEAN PATENT APPLICATION

(11) **EP 4 832 163 A1**
(43) Date of publication of application: **28.10.2026**
(21) Application number: 24926672.7
(22) Date of filing: 28.08.2024
(51) Int. Cl.: H01M 10/613

(54) **BATTERY AND ELECTRICAL DEVICE**

(30) Priority: 28.02.2024 CN 202420371112 U
(71) Applicant: Contemporary Amperex Technology Co., Limited, Ningde, Fujian 352100 (CN)
(72) Inventor: LIN, Xiujie, Ningde, Fujian 352100 (CN)
(74) Representative: Kraus & Lederer PartGmbB
(86) International application number: PCT/CN2024/115064
(87) International publication number: WO 2025/179805

(57) **Abstract**

The present application provides a battery and a power consuming apparatus. The battery includes a battery module (10) and a heat exchange assembly. The battery module (10) includes a plurality of battery cells (11). The heat exchange assembly includes a first current collector (21), a second current collector (22), and a plurality of heat exchange tubes (23). The first current collector (21) and the second current collector (22) are respectively located on two sides of the plurality of battery cells (11) along a first direction (X). The plurality of heat exchange tubes (23) are connected between the first current collector (21) and the second current collector (22). At least two of the heat exchange tubes (23) are disposed at an outer periphery of each of the battery cells (11). A recess portion (231) is provided on an outer side of the heat exchange tube (23), and the recess portion (231) accommodates a part of the battery cell (11).

## Description

### CROSS-REFERENCE TO RELATED APPLICATIONS

The present application claims priority to Chinese Patent Application No. 202420371112.7, filed on February 28, 2024 and entitled "BATTERY AND POWER CONSUMING APPARATUS", which is incorporated herein by reference in its entirety.

### TECHNICAL FIELD

The present application relates to the field of battery technologies, and in particular, to a battery and a power consuming apparatus.

### BACKGROUND

With the development of new energy technologies, batteries are widely used in more fields such as mobile phones, notebook computers, electric power carts, electric vehicles, electric airplanes, electric ships, electric toy cars, electric toy ships, electric toy airplanes, and electric tools.

In a battery, a heat exchange assembly is usually disposed to perform heat exchange on a battery cell. Heat exchange efficiency of the battery has an important impact on reliable operation of the battery. Therefore, how to effectively improve the heat exchange efficiency of the battery is an urgent problem to be solved in the battery technologies.

### SUMMARY

In view of the foregoing problem, the present application provides a battery and a power consuming apparatus, so that heat exchange efficiency, reliability, and an energy density of the battery can be improved.

According to a first aspect, an embodiment of the present application provides a battery. The battery includes a battery module and a heat exchange assembly. The battery module includes a plurality of battery cells. The heat exchange assembly includes a first current collector, a second current collector, and a plurality of heat exchange tubes. The first current collector and the second current collector are respectively located on two sides of the plurality of battery cells along a first direction. The plurality of heat exchange tubes are connected between the first current collector and the second current collector. At least two of the heat exchange tubes are disposed at an outer periphery of each of the battery cells. A recess portion is provided on an outer side of the heat exchange tube, and the recess portion accommodates a part of the battery cell.

On one hand, the recess portion on the outer side of the heat exchange tube can accommodate a part of the battery cell. Therefore, an effective contact area between the heat exchange tube and the battery cell can be increased, to improve overall heat exchange efficiency of the battery and stability of the battery cell, thereby facilitating improving reliability of the battery. In addition, compactness between the heat exchange tube and the battery cell can be improved, to improve space utilization of the heat exchange assembly, thereby facilitating improving an energy density of the battery. On the other hand, the first current collector and the second current collector can further separately perform heat exchange on the two sides of the battery cells along the first direction, thereby further improving the heat exchange efficiency of the battery. In this way, the foregoing technical solution can improve the heat exchange efficiency, the reliability, and the energy density of the battery.

In some embodiments of the first aspect, the at least two of the heat exchange tubes disposed at the outer periphery of each of the battery cells are connected to each other.

In the foregoing technical solution, the plurality of heat exchange tubes are connected to each other, to improve overall structural strength of the heat exchange assembly, thereby further improving the stability of the battery cell.

In some embodiments of the first aspect, the battery further includes a box body, and the plurality of battery cells are accommodated in the box body. An inlet and an outlet are provided in the box body. The first current collector is connected to the inlet. The second current collector is connected to the outlet. The first current collector is located at a bottom of the battery cell.

In the foregoing technical solution, the gravity needs to be overcome in a process in which a heat exchange medium flows in the heat exchange tube. Therefore, a flow speed of the heat exchange medium is low, so that sufficient heat exchange can be performed between the heat exchange medium and the battery cell, thereby improving utilization efficiency of the heat exchange medium.

In some embodiments of the first aspect, the outlet includes a first outlet and a second outlet, the first outlet is connected to the first current collector, and the second outlet is connected to the second current collector.

In the foregoing technical solution, the first outlet is provided to partially distribute a heat exchange medium in the first current collector, so as to reduce an overall temperature of the heat exchange medium in the first current collector, thereby further improving a heat exchange effect of the heat exchange assembly.

In some embodiments of the first aspect, the box body includes a frame body. An opening is provided at one end of the frame body, and the first current collector covers the opening.

In the foregoing technical solution, the first current collector not only can serve as a part of the heat exchange assembly to transmit the heat exchange medium, but also can serve as a part of the box body to jointly form, with the frame body, accommodating space for accommodating the battery cell, so that overall structural complexity of the battery can be reduced, thereby facilitating reducing costs of the battery.

In some embodiments of the first aspect, there are a plurality of battery modules, and the plurality of battery modules are disposed spaced away in the box body.

When the battery includes the plurality of battery modules, the plurality of battery modules may share one first current collector, to further reduce the overall structural complexity of the battery.

In some embodiments of the first aspect, a plurality of first joints are disposed on the first current collector, and a plurality of second joints are disposed on the second current collector. The heat exchange tube further includes a first tube mouth and a second tube mouth that are opposite to each other along the first direction. The first joint is plugged to the first tube mouth, and the second joint is plugged to the second tube mouth.

On one hand, in the foregoing technical solution, connection robustness between the first current collector and the heat exchange tube and connection robustness between the second current collector and the heat exchange tube can be improved, to improve reliability of the heat exchange assembly. On the other hand, in the foregoing technical solution, there is further a positioning function between the first joint and the first tube mouth and between the second joint and the second tube mouth, to improve assembly efficiency of the heat exchange assembly.

In some embodiments of the first aspect, the heat exchange assembly further includes a sealing member, and the sealing member is connected between the first joint and the first tube mouth; and/or the sealing member is connected between the second joint and the second tube mouth, so that a risk of leakage of the heat exchange medium can be reduced, thereby further improving the reliability of the battery.

In some embodiments of the first aspect, there are a plurality of sealing members, and the plurality of sealing members are disposed spaced away along the first direction, so that sealing performance of the heat exchange assembly can be further improved.

In some embodiments of the first aspect, the heat exchange tube includes a bent wall, and the bent wall is bent toward an interior of the heat exchange tube, to form the recess portion on the outer side of the heat exchange tube.

The recess portion is formed on the outer side of the heat exchange tube in a manner of bending the entire bent wall toward the interior of the heat exchange tube. On one hand, difficulty of a preparation process can be reduced, thereby facilitating reducing the costs. On the other hand, smoothness of an overall structure of the heat exchange tube can be improved, thereby facilitating improving appearance quality of the heat exchange tube.

In some embodiments of the first aspect, there are a plurality of bent walls, the plurality of bent walls are successively connected along a peripheral direction of the heat exchange tube and enclose a channel, and the channel is connected to the first current collector and the second current collector.

In the foregoing technical solutions, a quantity of bent walls of the heat exchange tube is increased, so that one heat exchange tube can simultaneously perform heat exchange on a plurality of battery cells. Therefore, space utilization of the heat exchange tube can be further improved, thereby facilitating further improving the energy density of the battery.

In some embodiments of the first aspect, the heat exchange tube further includes a partition member. The partition member is connected to an inner wall of the channel and partitions the channel into a plurality of sub-channels. The plurality of sub-channels are disposed spaced away along the peripheral direction of the heat exchange tube.

In the foregoing technical solution, more resistance needs to be overcome in a process in which the heat exchange medium flows in the plurality of sub-channels. Therefore, the flow speed of the heat exchange medium is low, so that the sufficient heat exchange can be performed between the heat exchange medium and the battery cell, thereby improving the utilization efficiency of the heat exchange medium.

In some embodiments of the first aspect, the plurality of sub-channels are in one-to-one correspondence with the plurality of bent walls, so that heat exchange efficiency of the heat exchange tube can be further improved.

In some embodiments of the first aspect, the partition member and the bent wall are of an integrally formed structure.

On one hand, the partition member and the bent wall do not need to be connected by using an additional connection process, thereby simplifying a production process procedure. In addition, in comparison with connecting the partition member to the bent wall by using the additional connection process, the partition member and the bent wall that are of the integral structure have higher connection robustness.

In some embodiments of the first aspect, the battery module further includes a binding component. The binding component is sleeved on and connected to a side portion of the plurality of battery cells along a direction perpendicular to the first direction, and applies a preload force to the plurality of battery cells along the direction perpendicular to the first direction, to improve stability of the battery module.

In some embodiments of the first aspect, the battery module further includes a sampling assembly. The sampling assembly includes a bracket and a bus member. The second current collector is connected to a side of the bracket close to the battery cell, and the bus member is disposed on a side of the bracket facing away from the battery cell. A through hole is provided on the bracket, and an electrode terminal of the battery cell is connected to the bus member through the through hole.

In the foregoing technical solution, the second current collector is connected to the side of the bracket close to the battery cell, so that a risk that flow of the heat exchange medium between the second current collector and the heat exchange tube interferes with the sampling assembly can be reduced, thereby further improving the reliability of the battery.

In some embodiments of the first aspect, at least a part of the second current collector is embedded inside the bracket.

A space occupation rate of the second current collector can be reduced, so that the energy density of the battery can be further improved.

In some embodiments of the first aspect, the battery cell is a cylindrical battery cell.

According to a second aspect, the present application provides a power consuming apparatus, including the battery provided in any one of the embodiments in the first aspect. The battery is configured provide electric energy.

The foregoing descriptions only refer to an overview of the technical solutions of the present application. To understand the technical means of the present application more clearly, it can be implemented according to content of the descriptions. To make the foregoing and other objectives, features and advantages of the present application more apparent, specific embodiments of the present application are listed below.

### BRIEF DESCRIPTION OF THE DRAWINGS

Various other advantages and benefits become clear to a person of ordinary skill in the art by reading the following detailed description of exemplary implementations. The accompanying drawings are only for the objective of illustrating preferred embodiments and are not construed as limiting the present application. Throughout the accompanying drawings, the same reference numerals are used to represent the same components. In the accompanying drawings:
FIG. 1 is a schematic diagram of a structure of a vehicle according to some embodiments of the present application;
FIG. 2 is a schematic diagram of a three-dimensional structure of a battery according to some embodiments of the present application;
FIG. 3 is a schematic diagram of a three-dimensional structure of a battery module of a battery according to some embodiments of the present application;
FIG. 4 is a schematic diagram of a structure of the battery module shown in FIG. 3 in a first direction;
FIG. 5 is a schematic diagram of a partial three-dimensional structure of a box body of a battery according to some embodiments of the present application;
FIG. 6 is a schematic diagram of a structure of the box body shown in FIG. 5 in a first direction;
FIG. 7 is a schematic cross-sectional view of the structure in FIG. 6 along A-A;
FIG. 8 is a schematic diagram of a three-dimensional structure of a second current collector of a battery according to some embodiments of the present application;
FIG. 9 is a schematic diagram of a three-dimensional structure in which a plurality of heat exchange tubes of a battery fit according to some embodiments of the present application;
FIG. 10 is a schematic diagram of a three-dimensional structure of a heat exchange tube of a battery according to some embodiments of the present application;
FIG. 11 is a schematic front view of a structure of a heat exchange tube of a battery according to some embodiments of the present application;
FIG. 12 is a schematic cross-sectional view of the structure in FIG. 11 along B-B;
FIG. 13 is a schematic cross-sectional view of the structure in FIG. 11 along C-C;
FIG. 14 is a schematic cross-sectional view of a structure of a first joint of a battery according to some embodiments of the present application; and
FIG. 15 is a schematic diagram of a three-dimensional structure in which a second current collector of a battery fits a sampling assembly according to some embodiments of the present application.

Reference numerals in the specific embodiments are as follows:
1. vehicle; 2. battery; 3. controller; 4. motor;
10. battery module; 11. battery cell; 12. binding component; 13. sampling assembly; 131. bracket; 1311. through hole; 132. bus member; 21. first current collector; 211. first joint; 22. second current collector; 221. second joint; 23. heat exchange tube; 231. recess portion; 232. first tube mouth; 233. second tube mouth; 234. bent wall; 235. channel; 2351. sub-channel; 236. partition member; 30. box body; 31. inlet; 32. outlet; 321. first outlet; 322. second outlet; 33. frame body; 40. sealing member; X. first direction.

### DETAILED DESCRIPTION

To make the objectives, technical solutions, and advantages of embodiments of the present application clearer, the technical solutions in the embodiments of the present application are clearly and completely described below with reference to the accompanying drawings of the embodiments of the present application. It is clear that the described embodiments are a part of the embodiments of the present application, rather than all of the embodiments. All other embodiments obtained by a person of ordinary skill in the art based on the embodiments of the present application without creative efforts shall fall within the protection scope of the present application.

Unless otherwise defined, all technical and scientific terms used in the present application have the same meanings as commonly understood by a person skilled in the technical field of the present application. In the present application, the terms used in descriptions of the present application are only for objectives of description of specific embodiments, and are not intended to limit the present application. The terms "including" and "having" in the descriptions and claims of the present application and the above brief descriptions of the accompanying drawings and any variations thereof are intended to cover non-exclusive inclusions. The terms "first", "second" and the like in the descriptions and claims or the above brief description of the accompanying drawings of the present application are used to distinguish different objects, rather than to describe a specific order or primary and secondary relationship.

Reference to "an embodiment" in the present application means that a particular feature, structure or characteristic described in connection with the embodiment may be included in at least one embodiment of the present application. Appearances of the phrase in various locations in this specification are not necessarily all referring to a same embodiment, nor are separate or alternative embodiments mutually exclusive of another embodiment.

In the descriptions of the present application, it should be noted that, unless otherwise clearly specified and limited, the terms "mounted", "connected", "connection" and "attached" should be understood in a broad sense, for example, they may refer to a fixed connection, a detachable connection or an integral connection, which may be a direct connection, an indirect connection via an intermediate medium, or an internal communication between two elements. A person of ordinary skill in the art may understand specific meanings of the terms in the present application according to specific situations.

The term "and/or" in the present application describes only an association relationship for describing associated objects and represents that three relationships may exist. For example, A and/or B may represent the following three cases: Only A exists, both A and B exist, and only B exists. In addition, the character "/" in the present application generally indicates that the associated objects have an "or" relationship.

In the embodiments of the present application, the same reference numerals denote the same components, and for the sake of brevity, detailed descriptions of the same components are omitted in different examples. It should be understood that the thickness, length, width and other dimensions of various components in the embodiments of the present application shown in the accompanying drawings, as well as the overall thickness, length and width, etc. of the integrated device are only exemplary descriptions, and should not constitute any limitation to the present application.

"A plurality of" appearing in the present application means two or more (including two).

In the present application, the term "parallel" includes not only the case of being absolutely parallel, but also the case of being approximately parallel in the conventional knowledge of engineering. Similarly, the term "perpendicular" includes not only the case of being absolutely perpendicular, but also the case of being approximately perpendicular in the conventional knowledge of engineering.

In the present application, a battery cell may include a lithium-ion secondary battery cell, a lithium-ion primary battery cell, a lithium-sulfur battery cell, a sodium lithium-ion battery cell, a sodium-ion battery cell, a magnesium-ion battery cell, or the like. This is not limited in the embodiments of the present application. The battery cell may be cylindrical, flat, rectangular, or in other shapes. This is also not limited in the embodiments of the present application.

A battery mentioned in the embodiments of the present application refers to a single physical module including one or more battery cells to provide a higher voltage and a higher capacity. When there are a plurality of battery cells, the plurality of battery cells are connected in series, in parallel, or in series-parallel through a bus component.

In some embodiments, the battery may be a battery module. When there are a plurality of battery cells, the plurality of battery cells are arranged and fixedly formed into a battery module.

In some embodiments, the battery may be a battery pack. The battery pack includes a box body and a battery cell, and the battery cell or a battery module is accommodated in the box body.

In some embodiments, the box body may serve as a part of a chassis structure of a vehicle. For example, a part of the box body may serve as at least a part of a floor of the vehicle, or a part of the box body may serve as at least a part of a cross beam and a longitudinal beam of the vehicle.

In some embodiments, the battery may be an energy storage apparatus. The energy storage apparatus includes an energy storage container, an energy storage electric cabinet, or the like.

With the development of new energy technologies, batteries are widely used in more fields such as mobile phones, notebook computers, electric power carts, electric vehicles, electric airplanes, electric ships, electric toy cars, electric toy ships, electric toy airplanes, and electric tools.

In a battery, a heat exchange assembly is usually disposed to perform heat exchange on a battery cell. Heat exchange efficiency of the battery has an important impact on reliable operation of the battery. Currently, a heat exchange plate is usually used to perform heat exchange on the battery cell. However, an effective contact area between the heat exchange plate and the battery cell is small, and space utilization is low. Consequently, overall heat exchange efficiency of the battery is low, and reliability of the battery is affected.

Based on the foregoing consideration, a battery is designed in the present application. The battery includes a battery module and a heat exchange assembly. The battery module includes a plurality of battery cells. The heat exchange assembly includes a first current collector, a second current collector, and a plurality of heat exchange tubes. The first current collector and the second current collector are respectively located on two sides of the plurality of battery cells along a first direction. The plurality of heat exchange tubes are connected between the first current collector and the second current collector. At least two of the heat exchange tubes are disposed at an outer periphery of each of the battery cells. A recess portion is provided on an outer side of the heat exchange tube, and the recess portion accommodates a part of the battery cell.

On one hand, the recess portion on the outer side of the heat exchange tube can accommodate a part of the battery cell. Therefore, an effective contact area between the heat exchange tube and the battery cell can be increased, to improve overall heat exchange efficiency of the battery and stability of the battery cell, thereby facilitating improving reliability of the battery. In addition, compactness between the heat exchange tube and the battery cell can be improved, to improve space utilization of the heat exchange assembly, thereby facilitating improving an energy density of the battery. On the other hand, the first current collector and the second current collector can further separately perform heat exchange on the two sides of the battery cells along the first direction, thereby further improving the heat exchange efficiency of the battery. In this way, the foregoing technical solution can improve the heat exchange efficiency, the reliability, and the energy density of the battery.

The technical solutions described in the embodiments of the present application are applicable to a battery and a power consuming apparatus using a battery.

The power consuming apparatus may be, but is not limited to, a vehicle, a mobile phone, a portable device, a notebook computer, a ship, a spacecraft, an electric toy, an electric tool, and the like. The vehicle may be, but is not limited to, a fuel vehicle, a gas vehicle or a new energy vehicle. The new energy vehicle may be, but is not limited to, an all-electric vehicle, a hybrid vehicle, an extended-range vehicle, or the like. The spacecraft includes, but is not limited to, airplanes, rockets, space shuttles, spaceships, and the like. The electric toy includes, but is not limited to, fixed or mobile electric toys, such as game consoles, electric car toys, electric ship toys and electric aircraft toys. The electric tool includes, but is not limited to, metal cutting electric tools, grinding electric tools, assembly electric tools and railway electric tools, such as electric drills, electric grinders, electric wrenches, electric screwdrivers, electric hammers, impact drills, concrete vibrators and electric planers.

It should be understood that the technical solutions described in the embodiments of the present application are not only limited to the battery and power consuming apparatus described above, but also applicable to all batteries including a battery box body and power consuming apparatuses using batteries, but for the sake of brevity, the following embodiments are described by using an electric vehicle as an example.

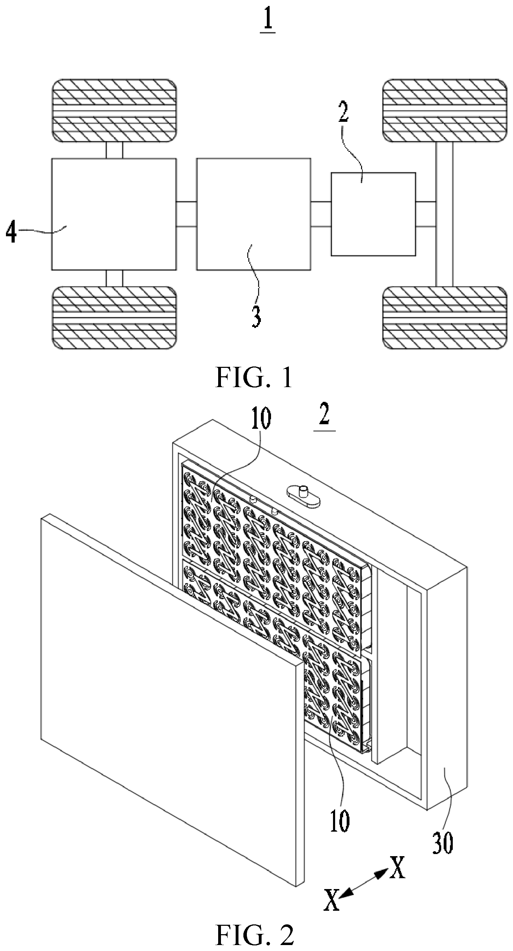

FIG. 1 is a schematic diagram of a structure of a vehicle according to some embodiments of the present application.

Still refer to FIG. 1, a battery 2 is disposed inside a vehicle 1. The battery 2 may be disposed at the bottom, the front or the back of the vehicle 1. The battery 2 may be configured to supply power to the vehicle 1. For example, the battery 2 may serve as an operating power supply of the vehicle 1.

The vehicle 1 may further include a controller 3 and a motor 4, and the controller 3 is configured to control the battery 2 to supply power to the motor 4, for example, for operating power demands while the vehicle 1 is starting, navigating, and driving.

In some embodiments of the present application, the battery 2 may not only serve as the operating power supply of the vehicle 1, but also serve as a driving power supply of the vehicle 1 to provide driving power for the vehicle 1 instead of or partially instead of fuel or natural gas.

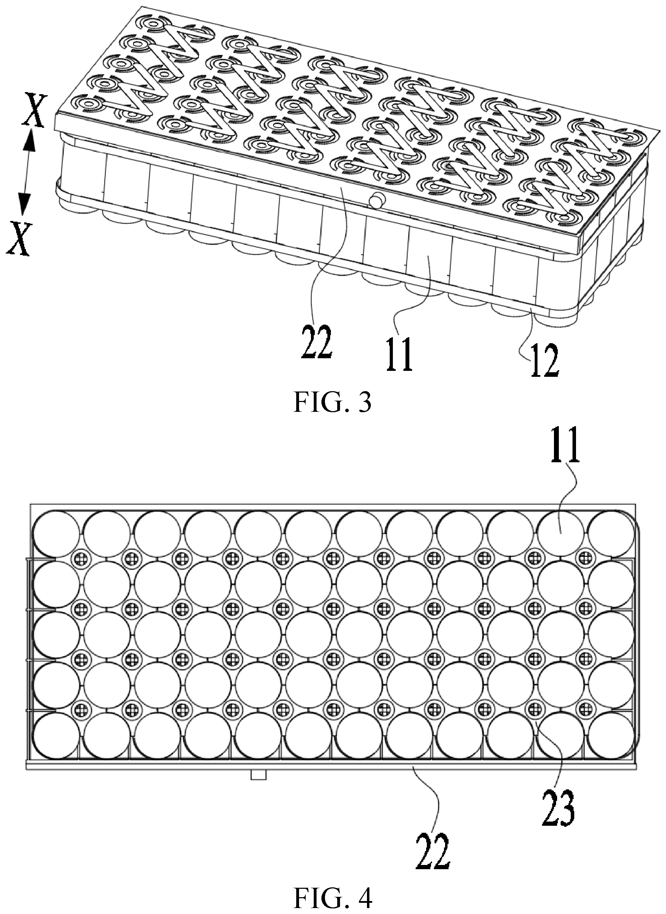

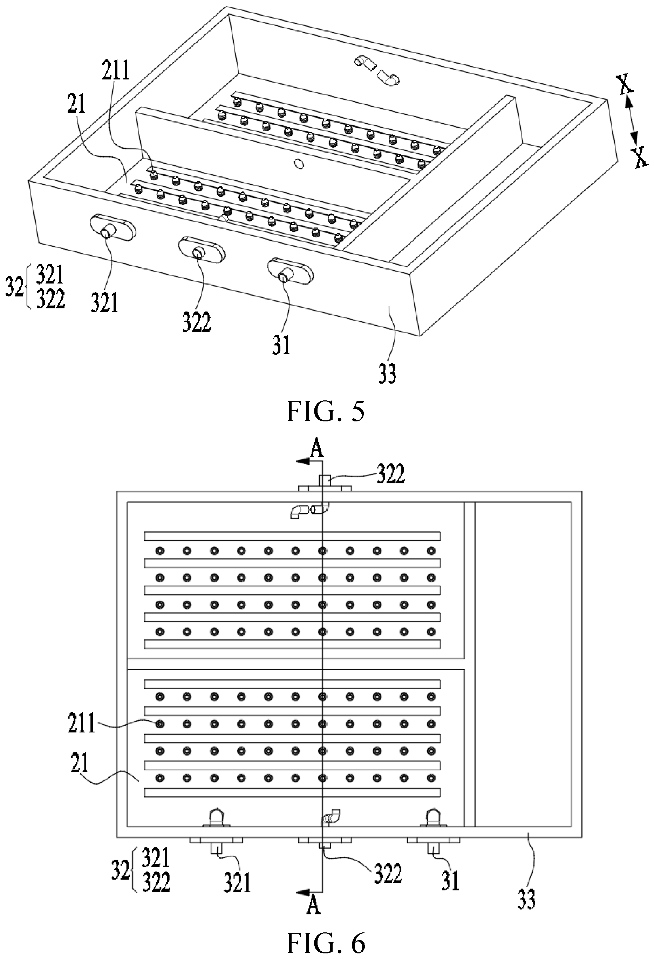

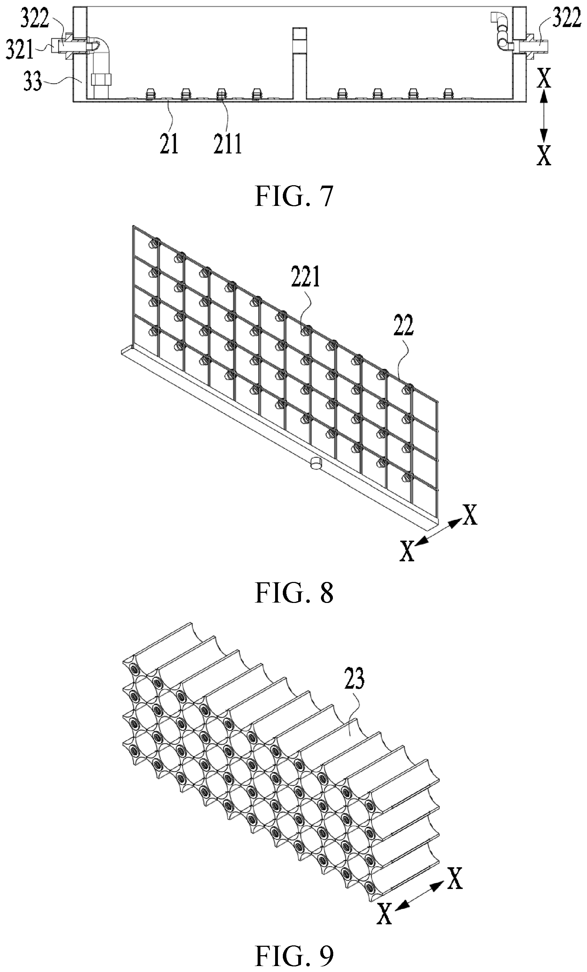

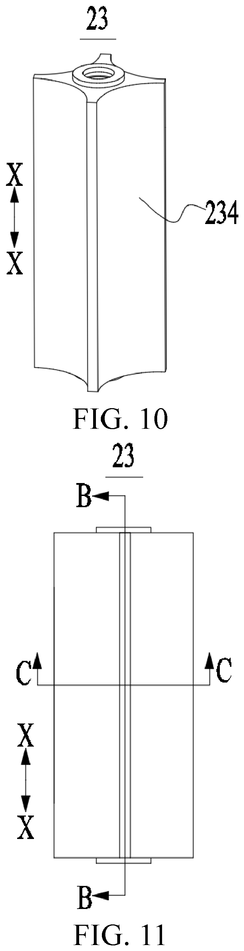

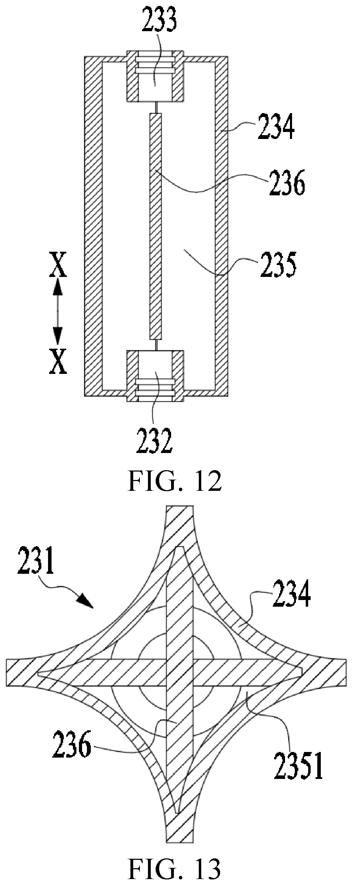

FIG. 2 is a schematic diagram of a three-dimensional structure of a battery according to some embodiments of the present application. FIG. 3 is a schematic diagram of a three-dimensional structure of a battery module of a battery according to some embodiments of the present application. FIG. 4 is a schematic diagram of a structure of the battery module shown in FIG. 3 in a first direction. FIG. 5 is a schematic diagram of a partial three-dimensional structure of a box body of a battery according to some embodiments of the present application. FIG. 6 is a schematic diagram of a structure of the box body shown in FIG. 5 in a first direction. FIG. 7 is a schematic cross-sectional view of the structure in FIG. 6 along A-A. FIG. 8 is a schematic diagram of a three-dimensional structure of a second current collector of a battery according to some embodiments of the present application. FIG. 9 is a schematic diagram of a three-dimensional structure in which a plurality of heat exchange tubes of a battery fit according to some embodiments of the present application. FIG. 10 is a schematic diagram of a three-dimensional structure of a heat exchange tube of a battery according to some embodiments of the present application. FIG. 11 is a schematic front view of a structure of a heat exchange tube of a battery according to some embodiments of the present application. FIG. 12 is a schematic cross-sectional view of the structure in FIG. 11 along B-B. FIG. 13 is a schematic cross-sectional view of the structure in FIG. 11 along C-C.

Still refer to FIG. 2 to FIG. 13, an embodiment of the present application provides a battery 2. The battery 2 includes a battery module 10 and a heat exchange assembly. The battery module 10 includes a plurality of battery cells 11. The heat exchange assembly includes a first current collector 21, a second current collector 22, and a plurality of heat exchange tubes 23. The first current collector 21 and the second current collector 22 are respectively located on two sides of the plurality of battery cells 11 along a first direction X. The plurality of heat exchange tubes 23 are connected between the first current collector 21 and the second current collector 22. At least two of the heat exchange tubes 23 are disposed at an outer periphery of each of the battery cells 11. A recess portion 231 is provided on an outer side of the heat exchange tube 23, and the recess portion 231 accommodates a part of the battery cell 11.

For example, the battery cell 11 may be, but is not limited to, a cylindrical battery cell or a square battery cell. To describe the embodiments of the present application more clearly, an example in which the battery cell 11 is a cylindrical battery cell is used below for description.

The plurality of battery cells 11 may be connected in series, in parallel, or in series-parallel. The series-parallel connection refers that the plurality of battery cells 11 are connected in both series and parallel. The plurality of battery cells 11 in the battery module 10 may be directly connected in series, in parallel, or in series-parallel, or may be electrically connected through a bus member, so that the plurality of battery cells 11 in the battery module 10 are connected in series, in parallel, or in series-parallel.

The heat exchange tube 23 may be detachably connected between the first current collector 21 and the second current collector 22, or may be integrally disposed on the first current collector 21 and the second current collector 22. The heat exchange tube 23 may be directly connected to the first current collector 21 and the second current collector 22, or may be limited to the first current collector 21 and the second current collector 22 by using another component. For example, a connection manner between the heat exchange tube 23 and the first current collector 21 and a connection manner between the heat exchange tube 23 and the second current collector 22 may be, but are not limited to, bolting, welding, riveting, clipping, or binding. A heat exchange medium may enter the plurality of heat exchange tubes 23 through the first current collector 21, and exit the plurality of heat exchange tubes 23 through the second current collector 22. Alternatively, the heat exchange medium may enter the plurality of heat exchange tubes 23 through the second current collector 22, and exit the plurality of heat exchange tubes 23 through the first current collector 21.

Optionally, the heat exchange tube 23 may be, but is not limited to, made of a metal or non-metal material. For example, the metal material may be copper, a copper alloy, aluminum, an aluminum alloy, nickel, a nickel alloy, titanium, a titanium alloy, stainless steel, or the like. The non-metal material may be ceramic, polyethylene, polypropylene, polyvinyl chloride, polyimide, polyamide, or the like.

Optionally, the first current collector 21 and the second current collector 22 may both be, but are not limited to, a plate-shaped structure, a tube-shaped structure, or the like. The first current collector 21 and the second current collector 22 may be, but are not limited to, made of a metal or non-metal material. For example, the metal material may be copper, a copper alloy, aluminum, an aluminum alloy, nickel, a nickel alloy, titanium, a titanium alloy, stainless steel, or the like. The non-metal material may be ceramic, polyethylene, polypropylene, polyvinyl chloride, polyimide, polyamide, or the like.

For example, the heat exchange tube 23, the first current collector 21, and the second current collector 22 may be made of a same material, to simplify a production process and facilitate reducing costs.

The at least two of the heat exchange tubes 23 are disposed at the outer periphery of each of the battery cells 11, and the at least two heat exchange tubes 23 are circularly disposed at the outer periphery of the battery cell 11. A quantity of heat exchange tubes 23 disposed at the outer periphery of each of the battery cells 11 may be two, three, four, or more.

For example, the recess portion 231 may be formed by recessing an outer surface of the heat exchange tube 23, or may be formed by bending a tube wall of the heat exchange tube 23 inward. A structural shape of the recess portion 231 matches the structural shape of an outer surface of the battery cell 11, to increase an effective contact area between the heat exchange tube 23 and the battery cell 11 as much as possible.

On one hand, the recess portion 231 on the outer side of the heat exchange tube 23 can accommodate a part of the battery cell 11. Therefore, the effective contact area between the heat exchange tube 23 and the battery cell 11 can be increased, to improve overall heat exchange efficiency of the battery 2 and stability of the battery cell 11, thereby facilitating improving reliability of the battery 2. In addition, compactness between the heat exchange tube 23 and the battery cell 11 can be improved, to improve space utilization of the heat exchange assembly, thereby facilitating improving an energy density of the battery 2. On the other hand, the first current collector 21 and the second current collector 22 can further separately perform heat exchange on the two sides of the battery cells 11 along the first direction X, thereby further improving the heat exchange efficiency of the battery 2. In this way, the foregoing technical solution can improve the heat exchange efficiency, the reliability, and the energy density of the battery 2.

In some embodiments, the at least two of the heat exchange tubes 23 disposed at the outer periphery of each of the battery cells 11 are connected to each other.

For example, two adjacent heat exchange tubes 23 of the at least two of the heat exchange tubes 23 disposed at the outer periphery of each of the battery cells 11 may be detachably connected, or may be fixedly connected. The two adjacent heat exchange tubes 23 may be directly connected to each other, or may be indirectly connected to each other by using another component. For example, a connection manner between the two adjacent heat exchange tubes 23 may be, but is not limited to, bolting, welding, riveting, clipping, or binding. In a specific example, the two adjacent heat exchange tubes 23 of the at least two of the heat exchange tubes 23 disposed at the outer periphery of each of the battery cells 11 abut against each other and are connected to each other through welding.

In the foregoing technical solution, the plurality of heat exchange tubes 23 are connected to each other, to improve overall structural strength of the heat exchange assembly, thereby further improving the stability of the battery cell 11.

In some embodiments, the battery 2 further includes a box body 30, and the plurality of battery cells 11 are accommodated in the box body 30. An inlet 31 and an outlet 32 are provided in the box body 30. The first current collector 21 is connected to the inlet 31. The second current collector 22 is connected to the outlet 32. The first current collector 21 is located at a bottom of the battery cell 11.

For example, the box body 30 is configured to accommodate the battery cell 11. The inlet 31 and the outlet 32 are provided in the box body 30, to facilitate connection between the heat exchange assembly and a related component outside the battery 2. The heat exchange medium flows into the first current collector 21 through the inlet 31. The heat exchange medium first spreads in the first current collector 21. After the heat exchange medium fills the first current collector 21, the heat exchange medium is gradually distributed to enter the plurality of heat exchange tubes 23. The heat exchange medium located in the plurality of heat exchange tubes 23 is collected into the second current collector 22, and finally flows out through the outlet 32.

In the foregoing technical solution, the gravity needs to be overcome in a process in which the heat exchange medium flows in the heat exchange tube 23. Therefore, a flow speed of the heat exchange medium is low, so that sufficient heat exchange can be performed between the heat exchange medium and the battery cell 11, thereby improving utilization efficiency of the heat exchange medium.

In some embodiments, the outlet 32 includes a first outlet 321 and a second outlet 322, the first outlet 321 is connected to the first current collector 21, and the second outlet 322 is connected to the second current collector 22.

For example, the heat exchange medium flows into the first current collector 21 through the inlet 31. The heat exchange medium first spreads in the first current collector 21. After the heat exchange medium fills the first current collector 21, one part of the heat exchange medium is gradually distributed to enter the plurality of heat exchange tubes 23, and the other part of the heat exchange medium flows out of the first current collector 21 through the first outlet 321. The heat exchange medium located in the plurality of heat exchange tubes 23 is collected into the second current collector 22, and finally flows out through the outlet 32.

It may be understood that the heat exchange medium in the first current collector 21 may perform heat exchange with the bottom of the battery cell 11. As a result, a temperature of the heat exchange medium in the first current collector 21 is higher than a temperature of the heat exchange medium at the inlet 31. After a part of the heat exchange medium having the higher temperature flows out of the first current collector 21 through the first outlet 321, the heat exchange medium having the lower temperature continuously enters the first current collector 21 through the inlet 31, so that the overall temperature of the heat exchange medium in the first current collector 21 is reduced, and a temperature of the heat exchange medium entering the plurality of heat exchange tubes 23 is low, thereby improving a heat exchange effect of the heat exchange tubes 23 on a large-area region of the battery cell 11.

In this way, in the foregoing technical solution, the first outlet 321 is provided to partially distribute the heat exchange medium in the first current collector 21, so as to reduce the overall temperature of the heat exchange medium in the first current collector 21, thereby further improving a heat exchange effect of the heat exchange assembly.

In some embodiments, the box body 30 includes a frame body 33. An opening is provided at one end of the frame body 33, and the first current collector 21 covers the opening.

For example, the first current collector 21 may be connected to the frame body 33 to close the opening at one end of the frame body 33, and the first current collector 21 jointly form, with the frame body 33, accommodating space for accommodating the battery cell 11. The first current collector 21 may be detachably connected to the frame body 33, or may be fixedly connected to the frame body 33. The first current collector 21 may be directly connected to the frame body 33, or may be limited to the frame body 33 by using another component. For example, a connection manner between the first current collector 21 and the frame body 33 may be, but is not limited to, bolting, welding, riveting, clipping, or binding.

Optionally, the frame body 33 may be, but is not limited to, made of a metal or non-metal material. For example, the metal material may be copper, a copper alloy, aluminum, an aluminum alloy, nickel, a nickel alloy, titanium, a titanium alloy, stainless steel, or the like. The non-metal material may be polyethylene, polypropylene, polyvinyl chloride, woods, or the like.

In the foregoing technical solution, the first current collector 21 not only can serve as a part of the heat exchange assembly to transmit the heat exchange medium, but also can serve as a part of the box body 30 to jointly form, with the frame body 33, the accommodating space for accommodating the battery cell 11, so that overall structural complexity of the battery 2 can be reduced, thereby facilitating reducing costs of the battery 2.

In some embodiments, there are a plurality of battery modules 10, and the plurality of battery modules 10 are disposed spaced away in the box body 30.

For example, a quantity of the battery modules 10 may be, but is not limited to, two, three, four, or more. When the battery 2 includes the plurality of battery modules 10, the plurality of battery modules 10 may share one first current collector 21, to further reduce the overall structural complexity of the battery 2.

Optionally, the plurality of battery modules 10 may respectively correspond to one second current collector 22, or may share one second current collector 22.

In some embodiments, a plurality of first joints 211 are disposed on the first current collector 21, and a plurality of second joints 221 are disposed on the second current collector 22. The heat exchange tube 23 further includes a first tube mouth 232 and a second tube mouth 233 that are opposite to each other along the first direction X. The first joint 211 is plugged to the first tube mouth 232, and the second joint 221 is plugged to the second tube mouth 233.

For example, that the first joint 211 is plugged to the first tube mouth 232 may be that the first joint 211 is inserted into the first tube mouth 232, or the first tube mouth 232 is inserted into the first joint 211. That the second joint 221 is plugged to the second tube mouth 233 may be that the second joint 221 is inserted into the second tube mouth 233, or the second tube mouth 233 is inserted into the second joint 221.

The first joint 211 may be detachably connected to the first current collector 21, or may be fixedly connected to the first current collector 21. The first joint 211 may be directly connected to the first current collector 21, or may be limited to the first current collector 21 by using another component. For example, a connection manner between the first joint 211 and the first current collector 21 may be, but is not limited to, bolting, welding, riveting, clipping, or binding.

The second joint 221 may be detachably connected to the second current collector 22, or may be fixedly connected to the second current collector 22. The second joint 221 may be directly connected to the second current collector 22, or may be limited to the second current collector 22 by using another component. For example, a connection manner between the second joint 221 and the second current collector 22 may be, but is not limited to, bolting, welding, riveting, clipping, or binding.

Optionally, the first joint 211 and the first current collector 21 are of an integrally formed structure. On one hand, the first joint 211 and the first current collector 21 do not need to be connected by using an additional connection process, thereby simplifying a production process procedure. In addition, in comparison with connecting the first joint 211 to the first current collector 21 by using the additional connection process, the first joint 211 and the first current collector 21 that are of the integral structure have higher connection robustness.

Optionally, the second joint 221 and the second current collector 22 are of an integrally formed structure. On one hand, the second joint 221 and the second current collector 22 do not need to be connected by using an additional connection process, thereby simplifying a production process procedure. In addition, in comparison with connecting the second joint 221 to the second current collector 22 by using the additional connection process, the second joint 221 and the second current collector 22 that are of the integral structure have higher connection robustness.

Optionally, the first joint 211 and the second joint 221 each may be, but are not limited to, made of a metal or non-metal material. For example, the metal material may be copper, a copper alloy, aluminum, an aluminum alloy, nickel, a nickel alloy, titanium, a titanium alloy, stainless steel, or the like. The non-metal material may be ceramic, polyethylene, polypropylene, polyvinyl chloride, polyimide, polyamide, or the like.

For example, the first tube mouth 232 and the second tube mouth 233 each may be an opening provided on a tube wall of the heat exchange tube 23 and connected to the interior of the heat exchange tube 23. Alternatively, the first tube mouth 232 and the second tube mouth 233 each may be a tube-body structure projecting from a tube wall of the heat exchange tube 23 and connected to the interior of the heat exchange tube 23.

In an example, the first tube mouth 232 and the second tube mouth 233 each are a tube-body structure projecting from the tube wall of the heat exchange tube 23. Both the first tube mouth 232 and the second tube mouth 233 may be detachably connected to the heat exchange tube 23, or may be fixedly connected to the heat exchange tube 23. Both the first tube mouth 232 and the second tube mouth 233 may be directly connected to the heat exchange tube 23, or may be limited to the heat exchange tube 23 by using another component. For example, a connection manner between the first tube mouth 232 and the heat exchange tube 23 and a connection manner between the second tube mouth 233 and the heat exchange tube 23 each may be, but are not limited to, bolting, welding, riveting, clipping, or binding.

On one hand, in the foregoing technical solution, connection robustness between the first current collector 21 and the heat exchange tube 23 and connection robustness between the second current collector 22 and the heat exchange tube 23 can be improved, to improve reliability of the heat exchange assembly. On the other hand, in the foregoing technical solution, there is further a positioning function between the first joint 211 and the first tube mouth 232 and between the second joint 221 and the second tube mouth 233, to improve assembly efficiency of the heat exchange assembly.

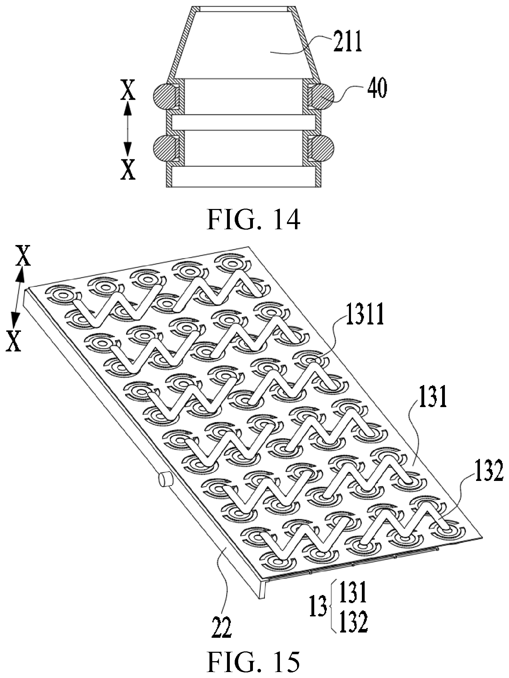

FIG. 14 is a schematic cross-sectional view of a structure of a first joint 211 of a battery 2 according to some embodiments of the present application.

Still refer to FIG. 14, in some embodiments, the heat exchange assembly further includes a sealing member 40, and the sealing member 40 is connected between the first joint 211 and the first tube mouth 232.

For example, the sealing member 40 may be disposed on the first joint 211, or may be disposed on the first tube mouth 232, or may be disposed on both the first joint 211 and the first tube mouth 232. After the first joint 211 is plugged to the first tube mouth 232, the sealing member 40 is connected between the first joint 211 and the first tube mouth 232, to sealing a gap between the first joint 211 and the first tube mouth 232.

In an example, the sealing member 40 is disposed on the first joint 211. The sealing member 40 may be detachably connected to the first joint 211, or may be fixedly connected to the first joint 211. The sealing member 40 is directly connected to the first joint 211, or may be limited to the first joint 211 by using another component. For example, a connection manner between the sealing member 40 and the first joint 211 and a connection manner between the second tube mouth 233 and the heat exchange tube 23 each may be, but are not limited to, bolting, welding, riveting, clipping, or binding.

Optionally, the sealing member 40 may be, but is not limited to, a sealing adhesive, a sealing ring, a sealing gasket, or the like. In an example, the sealing member 40 may be, but is not limited to, rubber, polyurethane, silicone rubber, plastic (for example, polyethylene or polypropylene), metal (for example, copper, aluminum, or stainless steel), a cellulose plate, or a composite material (for example, a combination of rubber and metal).

In the foregoing technical solution, the sealing member 40 is disposed between the first joint 211 and the first tube mouth 232, so that a risk of leakage of the heat exchange medium can be reduced, thereby further improving the reliability of the battery 2.

In some optional embodiments, the first joint 211 is provided with a first groove. The first groove is recessed relative to an outer wall surface of the first joint 211. A part of the sealing member 40 is accommodated in the first groove, so that a position of the sealing member 40 can be limited, to reduce a risk that the sealing member 40 falls off.

The first tube mouth 232 is provided with a second groove. The second groove is recessed relative to an inner wall surface of the first tube mouth 232. A part of the sealing member 40 is accommodated in the second groove, so that the position of the sealing member 40 can be further limited, to further reduce the risk that the sealing member 40 falls off.

In some optional embodiments, the sealing member 40 is connected between the second joint 221 and the second tube mouth 233, so that a risk of leakage of the heat exchange medium can be reduced, thereby further improving the reliability of the battery 2. For details of specific disposition among the sealing member 40, the second joint 221, and the second tube mouth 233, refer to the related descriptions of disposition among the sealing member 40, the first joint 211, and the first tube mouth 232, and details are not described herein again.

In some optional embodiments, the second joint 221 is provided with a third groove. The third groove is recessed relative to an outer wall surface of the second joint 221. A part of the sealing member 40 is accommodated in the third groove, so that a position of the sealing member 40 can be limited, to reduce a risk that the sealing member 40 falls off.

The second tube mouth 233 is provided with a fourth groove. The fourth groove is recessed relative to an inner wall surface of the second tube mouth 233. A part of the sealing member 40 is accommodated in the fourth groove, so that the position of the sealing member 40 can be further limited, to further reduce the risk that the sealing member 40 falls off.

In some embodiments, there are a plurality of sealing members 40, and the plurality of sealing members 40 are disposed spaced away along the first direction X, so that sealing performance of the heat exchange assembly can be further improved.

For example, a quantity of the sealing members 40 may be, but is not limited to, two, three, or more.

In some embodiments, the heat exchange tube 23 includes a bent wall 234, and the bent wall 234 is bent toward the interior of the heat exchange tube 23, to form the recess portion 231 on the outer side of the heat exchange tube 23.

The recess portion 231 is formed on the outer side of the heat exchange tube 23 in a manner of bending the entire bent wall 234 toward the interior of the heat exchange tube 23. On one hand, difficulty of a preparation process can be reduced, thereby facilitating reducing the costs. On the other hand, smoothness of an overall structure of the heat exchange tube 23 can be improved, thereby facilitating improving appearance quality of the heat exchange tube 23.

In some embodiments, there are a plurality of bent walls 234, the plurality of bent walls 234 are successively connected along a peripheral direction of the heat exchange tube 23 and enclose a channel 235, and the channel 235 is connected to the first current collector 21 and the second current collector 22. The heat exchange medium flows in the channel 235, and performs heat exchange with the battery cell 11 through the bent walls 234.

For example, a quantity of the bent walls 234 may be, but is not limited to, two, three, four, or more. Each bent wall 234 on each heat exchange tube 23 corresponds to one battery cell 11. In an example, when there are four bent walls 234, the four bent walls 234 of one heat exchange tube 23 are disposed respectively corresponding to four battery cells 11. In other words, four heat exchange tubes 23 are disposed surrounding an outer periphery of one battery cell 11.

In the foregoing technical solutions, a quantity of bent walls 234 of the heat exchange tube 23 is increased, so that one heat exchange tube 23 can simultaneously perform heat exchange on a plurality of battery cells 11. Therefore, space utilization of the heat exchange tube 23 can be further improved, thereby facilitating further improving the energy density of the battery 2.

In some embodiments, the heat exchange tube 23 further includes a partition member 236. The partition member 236 is connected to an inner wall of the channel 235 and partitions the channel 235 into a plurality of sub-channels 2351. The plurality of sub-channels 2351 are disposed spaced away along the peripheral direction of the heat exchange tube 23.

For example, when the heat exchange medium enters the heat exchange tube 23, the partition member 236 distributes the heat exchange medium, so that the heat exchange medium flows into the plurality of sub-channels 2351. The partition member 236 may be detachably connected to the bent wall 234, or may be fixedly connected to the bent wall 234. The partition member 236 is directly connected to the bent wall 234, or may be limited to the bent wall 234 by using another component. For example, a connection manner between the partition member 236 and the bent wall 234 may be, but is not limited to, bolting, welding, riveting, clipping, or binding.

Optionally, the partition member 236 may be, but is not limited to, made of a metal or non-metal material. For example, the metal material may be copper, a copper alloy, aluminum, an aluminum alloy, nickel, a nickel alloy, titanium, a titanium alloy, stainless steel, or the like. The non-metal material may be ceramic, polyethylene, polypropylene, polyvinyl chloride, polyimide, polyamide, or the like.

It may be understood that, after the partition member 236 partitions the channel 235 into the plurality of sub-channels 2351, a sum of surface areas of the plurality of sub-channels 2351 is greater than a surface area of the channel 235, so that a total contact area between the heat exchange medium and the heat exchange tube 23 can be increased, and resistance suffered by the heat exchange medium in a flow process in the heat exchange tube 23 is larger.

In this way, in the foregoing technical solution, more resistance needs to be overcome in a process in which the heat exchange medium flows in the plurality of sub-channels 2351. Therefore, the flow speed of the heat exchange medium is low, so that the sufficient heat exchange can be performed between the heat exchange medium and the battery cell 11, thereby improving the utilization efficiency of the heat exchange medium.

In some embodiments, the plurality of sub-channels 2351 are in one-to-one correspondence with the plurality of bent walls 234, so that heat exchange efficiency of the heat exchange tube 23 can be further improved.

For example, a quantity of the sub-channels 2351 matches a quantity of the bent walls 234. In an example, when there are four bent walls 234, there are also four sub-channels 2351, and one of the sub-channels 2351 corresponds to one of the bent walls 234. Optionally, the partition member 236 and the bent wall 234 enclose the sub-channel 2351.

In some embodiments, the partition member 236 and the bent wall 234 are of an integrally formed structure.

On one hand, the partition member 236 and the bent wall 234 do not need to be connected by using an additional connection process, thereby simplifying a production process procedure. In addition, in comparison with connecting the partition member 236 to the bent wall 234 by using the additional connection process, the partition member 236 and the bent wall 234 that are of the integral structure have higher connection robustness.

Still refer to FIG. 3, in some embodiments, the battery module 10 further includes a binding component 12. The binding component 12 is sleeved on and connected to a side portion of the plurality of battery cells 11 along a direction perpendicular to the first direction X, and applies a preload force to the plurality of battery cells 11 along the direction perpendicular to the first direction X.

For example, the binding component 12 may be made of an elastic and insulating material, for example, rubber, silicon rubber, polyethylene, polyurethane, polyvinyl chloride, or rubber foam. The binding component 12 may be sleeved on the plurality of battery cells 11 and provide the preload force for the plurality of battery cells 11, to improve stability of the battery module 10.

Optionally, the binding component 12 includes a circular elastic band. The elastic band is sleeved on and connected to the side portion of the plurality of battery cells 11 along the direction perpendicular to the first direction X. The elastic band is connected head to tail to form a circular structure. The elastic band has high deformation performance, so that the elastic band can well wrap the plurality of battery cells 11, and can provide a more comprehensive preload force for the plurality of battery cells 11. In addition, the elastic band of the circular structure has a simple structure, low production costs, and good economic benefits.

FIG. 15 is a schematic diagram of a three-dimensional structure in which a second current collector 22 of a battery 2 fits a sampling assembly 13 according to some embodiments of the present application.

Still refer to FIG. 15, in some embodiments, the battery module 10 further includes a sampling assembly 13. The sampling assembly 13 includes a bracket 131 and a bus member 132. The second current collector 22 is connected to a side of the bracket 131 close to the battery cell 11, and the bus member 132 is disposed on a side of the bracket 131 facing away from the battery cell 11. A through hole 1311 is provided on the bracket 131, and an electrode terminal of the battery cell 11 is connected to the bus member 132 through the through hole 1311.

For example, the sampling assembly 13 may further include a component such as a current sensor, a voltage sensor, a temperature sensor, or a communication component disposed on the side of the bracket 131 facing away from the battery cell 11, to diversify functions. The bracket 131 is configured to provide a bearing function for the bus member 132 and the component such as the current sensor, the voltage sensor, the temperature sensor, or the communication component. The bus member 132 is configured to connect the plurality of battery cells 11 in the battery module 10 in series, in parallel, or in series-parallel.

The second current collector 22 may be detachably connected to the bracket 131, or may be fixedly connected to the bracket 131. The second current collector 22 is directly connected to the bracket 131, or may be limited to the bracket 131 by using another component. For example, a connection manner between the second current collector 22 and the bracket 131 may be, but is not limited to, bolting, welding, riveting, clipping, or binding.

In the foregoing technical solution, the second current collector 22 is connected to the side of the bracket 131 close to the battery cell 11, so that a risk that flow of the heat exchange medium between the second current collector 22 and the heat exchange tube 23 interferes with the sampling assembly 13 can be reduced, thereby further improving the reliability of the battery 2.

In some embodiments, at least a part of the second current collector 22 is embedded inside the bracket 131. Therefore, a space occupation rate of the second current collector 22 can be reduced, so that the energy density of the battery 2 can be further improved.

In some embodiments, the second current collector 22 and the bracket 131 are of an integrally formed structure. On one hand, the second current collector 22 and the bracket 131 do not need to be connected by using an additional connection process, thereby simplifying a production process procedure. In addition, in comparison with connecting the second current collector 22 to the bracket 131 by using the additional connection process, the second current collector 22 and the bracket 131 that are of the integral structure have higher connection robustness.

According to some embodiments of the present application, the present application further provides a power consuming apparatus, including the battery 2 in any one of the foregoing solutions. The battery 2 is separately configured provide electric energy.

To better understand the battery 2 provided in the embodiments of the present application, based on a same inventive concept, an embodiment of the battery 2 during actual application is provided herein for description.

An embodiment of the present application provides a battery 2. The battery 2 includes a box body 30, a plurality of battery modules 10, and a heat exchange assembly. The plurality of battery modules 10 are disposed spaced away in the box body 30. An inlet 31 and an outlet 32 are provided in the box body 30. The box body 30 includes a frame body 33, and an opening is provided at one end of the frame body 33. The battery module 10 includes a plurality of battery cells 11, a binding component 12, and a sampling assembly 13. The binding component 12 is sleeved on and connected to a side portion of the plurality of battery cells 11 along a direction perpendicular to a first direction X, and applies a preload force to the plurality of battery cells 11 along the direction perpendicular to the first direction X.

The heat exchange assembly includes a first current collector 21, a second current collector 22, a plurality of heat exchange tubes 23, and a sealing member 40. The first current collector 21 and the second current collector 22 are respectively located on two sides of the plurality of battery cells 11 along the first direction X. The first current collector 21 is connected to the inlet 31. The second current collector 22 is connected to the outlet 32. The first current collector 21 covers the opening and is located at a bottom of the battery cell 11. The outlet 32 includes a first outlet 321 and a second outlet 322, the first outlet 321 is connected to the first current collector 21, and the second outlet 322 is connected to the second current collector 22.

A plurality of first joints 211 are disposed on the first current collector 21, and a plurality of second joints 221 are disposed on the second current collector 22. The heat exchange tube 23 further includes a first tube mouth 232 and a second tube mouth 233 that are opposite to each other along the first direction X. The first joint 211 is plugged to the first tube mouth 232, and the second joint 221 is plugged to the second tube mouth 233. The sealing member 40 is connected between the first joint 211 and the first tube mouth 232, and the sealing member 40 is connected between the second joint 221 and the second tube mouth 233.

The plurality of heat exchange tubes 23 are connected between the first current collector 21 and the second current collector 22. At least two of the heat exchange tubes 23 are disposed at an outer periphery of each of the battery cells 11. The heat exchange tube 23 includes a plurality of bent walls 234 and a partition member 236. The plurality of bent walls 234 are successively connected along a peripheral direction of the heat exchange tube 23 and enclose a channel 235, and the channel 235 is connected to the first current collector 21 and the second current collector 22. The bent wall 234 is bent toward the interior of the heat exchange tube 23, to form a recess portion 231 on an outer side of the heat exchange tube 23. The recess portion 231 accommodates a part of the battery cell 11. The partition member 236 is connected to an inner wall of the channel 235 and encloses a sub-channel 2351 with the bent wall 234.

The sampling assembly 13 includes a bracket 131 and a bus member 132. The second current collector 22 is connected to a side of the bracket 131 close to the battery cell 11, and the bus member 132 is disposed on a side of the bracket 131 facing away from the battery cell 11. A through hole 1311 is provided on the bracket 131, and an electrode terminal of the battery cell 11 is connected to the bus member 132 through the through hole 1311.

It should be noted that the embodiments of the present application and features in the embodiments may be combined with each other without conflict.

In conclusion, it should be noted that the foregoing embodiments are only for description of the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, the various technical features mentioned in the various embodiments can be combined in any way provided there is no structural conflict. The present application is not limited to the particular embodiments disclosed herein, but includes all technical solutions that fall within the scope of the claims.

## Claims

1. A battery, comprising:
a battery module, comprising a plurality of battery cells; and
a heat exchange assembly, comprising a first current collector, a second current collector, and a plurality of heat exchange tubes, wherein the first current collector and the second current collector are respectively located on two sides of the plurality of battery cells along a first direction, the plurality of heat exchange tubes are connected between the first current collector and the second current collector, at least two of the heat exchange tubes are disposed at an outer periphery of each of the battery cells, a recess portion is provided on an outer side of the heat exchange tube, and the recess portion accommodates a part of the battery cell.

2. The battery according to claim 1, wherein the at least two of the heat exchange tubes disposed at the outer periphery of each of the battery cells are connected to each other.

3. The battery according to claim 1 or 2, wherein the battery further comprises a box body, and the plurality of battery cells are accommodated in the box body; and
an inlet and an outlet are provided in the box body, the first current collector is connected to the inlet, the second current collector is connected to the outlet, and the first current collector is located at a bottom of the battery cell.

4. The battery according to claim 3, wherein the outlet comprises a first outlet and a second outlet, the first outlet is connected to the first current collector, and the second outlet is connected to the second current collector.

5. The battery according to claim 3, wherein the box body comprises a frame body, an opening is provided at one end of the frame body, and the first current collector covers the opening.

6. The battery according to claim 5, wherein there are a plurality of battery modules, and the plurality of battery modules are disposed spaced away in the box body.

7. The battery according to any one of claims 1 to 6, wherein a plurality of first joints are disposed on the first current collector, and a plurality of second joints are disposed on the second current collector; and
the heat exchange tube further comprises a first tube mouth and a second tube mouth that are opposite to each other along the first direction, the first joint is plugged to the first tube mouth, and the second joint is plugged to the second tube mouth.

8. The battery according to claim 7, wherein the heat exchange assembly further comprises a sealing member, and the sealing member is connected between the first joint and the first tube mouth; and/or
the sealing member is connected between the second joint and the second tube mouth.

9. The battery according to claim 8, wherein there are a plurality of sealing members, and the plurality of sealing members are disposed spaced away along the first direction.

10. The battery according to any one of claims 1 to 9, wherein the heat exchange tube comprises a bent wall, and the bent wall is bent toward an interior of the heat exchange tube, to form the recess portion on the outer side of the heat exchange tube.

11. The battery according to claim 10, wherein there are a plurality of bent walls, the plurality of bent walls are successively connected along a peripheral direction of the heat exchange tube and enclose a channel, and the channel is connected to the first current collector and the second current collector.

12. The battery according to claim 11, wherein the heat exchange tube further comprises a partition member, the partition member is connected to an inner wall of the channel and partitions the channel into a plurality of sub-channels, and the plurality of sub-channels are disposed spaced away along the peripheral direction of the heat exchange tube.

13. The battery according to claim 12, wherein the plurality of sub-channels are in one-to-one correspondence with the plurality of bent walls.

14. The battery according to claim 12, wherein the partition member and the bent wall are of an integrally formed structure.

15. The battery according to any one of claims 1 to 14, wherein the battery module further comprises a binding component, the binding component is sleeved on and connected to a side portion of the plurality of battery cells along a direction perpendicular to the first direction, and applies a preload force to the plurality of battery cells along the direction perpendicular to the first direction.

16. The battery according to any one of claims 1 to 15, wherein the battery module further comprises a sampling assembly, the sampling assembly comprises a bracket and a bus member, the second current collector is connected to a side of the bracket close to the battery cell, and the bus member is disposed on a side of the bracket facing away from the battery cell; and
a through hole is provided on the bracket, and an electrode terminal of the battery cell is connected to the bus member through the through hole.

17. The battery according to claim 16, wherein at least a part of the second current collector is embedded inside the bracket.

18. The battery according to any one of claims 1 to 17, wherein the battery cell is a cylindrical battery cell.

19. A power consuming apparatus, comprising the battery according to any one of claims 1 to 18, wherein the battery is configured provide electric energy.
